(19) Europäisches Patentamt
European Patent Office
Office européen des brevets

(11) **EP 1 276 375 B1**

(12) **EUROPÄISCHE PATENTSCHRIFT**

(45) Veröffentlichungstag und Bekanntmachung des Hinweises auf die Patenterteilung:
**20.07.2005 Patentblatt 2005/29**

(21) Anmeldenummer: **01933807.8**

(22) Anmeldetag: **09.04.2001**

(51) Int Cl.[7]: **A01N 37/50**
// (A01N37/50, 61:00, 59:20)

(86) Internationale Anmeldenummer:
**PCT/EP2001/004042**

(87) Internationale Veröffentlichungsnummer:
**WO 2001/080641 (01.11.2001 Gazette 2001/44)**

(54) **FUNGIZIDE WIRKSTOFFKOMBINATIONEN**
FUNGICIDAL ACTIVE INGREDIENT COMBINATIONS
COMBINAISONS DE PRINCIPES ACTIFS FONGICIDES

(84) Benannte Vertragsstaaten:
**AT BE CH CY DE DK ES FI FR GB GR IE IT LI LU MC NL PT SE TR**

(30) Priorität: **20.04.2000 DE 10019758**

(43) Veröffentlichungstag der Anmeldung:
**22.01.2003 Patentblatt 2003/04**

(73) Patentinhaber: **Bayer CropScience AG**
**40789 Monheim (DE)**

(72) Erfinder:
- **WACHENDORFF-NEUMANN, Ulrike**
**56566 Neuwied (DE)**
- **SEITZ, Thomas**
**40764 Langenfeld (DE)**
- **GAYER, Herbert**
**40789 Monheim (DE)**
- **HEINEMANN, Ulrich**
**42799 Leichlingen (DE)**
- **KRÜGER, Bernd-Wieland**
**51467 Bergisch Gladbach (DE)**
- **KRÄMER, Wolfgang**
**51399 Burscheid (DE)**
- **ASSMANN, Lutz**
**40764 Langenfeld (DE)**

(56) Entgegenhaltungen:
**WO-A-96/23763** **WO-A-98/47367**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 276 375 B1

Printed by Jouve, 75001 PARIS (FR)

## Beschreibung

Die vorliegende Erfindung betrifft neue Wirkstoffkombinationen, die aus bekannten Methoximinoessigsäureamid-Derivaten einerseits und weiteren bekannten Wirkstoffen andererseits bestehen und sehr gut zur Bekämpfung von phytopathogenen Pilzen geeignet sind.

Es ist bereits bekannt, dass Alkoximinoessigsäureamid-Derivate fungizide Eigenschaften besitzen (vgl. WO 96/23763). Die Wirksamkeit dieser Stoffe ist gut, lässt aber bei niedrigen Aufwandmengen in manchen Fällen zu wünschen übrig.

Ferner ist schon bekannt, dass zahlreiche Triazol-Derivate, Anilin-Derivate, Dicarboximide und andere Heterocyclen zur Bekämpfung von Pilzen eingesetzt werden können (vgl. EP-A 0 040 345, DE-A 22 01 063, DE-A 23 24 010, Pesticide Manual, 9th. Edition (1991), Seiten 249 und 827, EP-A 0 382 375 und EP-A 0 515 901). Auch die Wirkung dieser Stoffe ist aber bei niedrigen Aufwandmengen nicht immer ausreichend.

Schließlich ist auch bekannt, dass 1-[(6-Chlor-3-pyridinyl)-methyl]-N-nitro-2-imidazolidinimin zur Bekämpfung tierischer Schädlinge, wie Insekten, verwendbar ist (vgl. Pesticide Manual, 9th. Edition (1991), Seite 491). Fungizide Eigenschaften dieses Stoffes wurden aber bisher noch nicht beschrieben.

Ferner ist bereits bekannt, dass 1-(3,5-Dimethyl-isoxazol-4-sulfonyl)-2-chlor-6,6-difluor-[1,3]-dioxolo-[4,5f]-benzimidazol fungizide Eigenschaften besitzt (vgl. WO 97-06171).

Ferner ist bereits bekannt, dass substituierte Azadioxacycloalkene eine fungizide Wirkung zeigen (vgl. EP-B-712 396).

Schließlich ist auch bekannt, dass substituierte Halogenpyrimidine fungizide Eigenschaften besitzen (vgl. DE-A1-196 46 407, EP-B-712 396).

Es wurde nun gefunden, dass die neuen Wirkstoffkombinationen aus Methoximinoessigsäureamid-Derivaten der allgemeinen Formel (I),

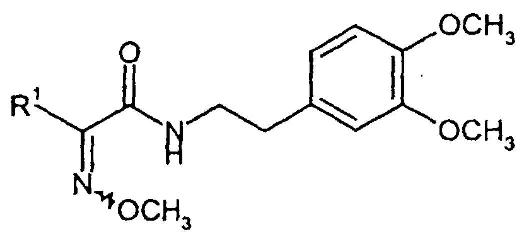

(I)

in welcher

$R^1$ für unsubstituiertes oder durch Fluor, Chlor, Brom, Methyl, Ethyl, n- oder i-Propyl, n-, i- oder t-Butyl, Methoxy, Ethoxy oder Phenoxy substituiertes Phenyl, 2-Naphthyl, 1,2,3,4-Tetrahydronaphthyl, Indanyl, 2-Benzofuranyl, 2-Benzothienyl, 2-Thienyl oder 2-Furanyl steht,

und

(45)

a) Kupferoxychlorid (XXXXVIa)
b) Kupferhydroxid (XXXXVIb)

sehr gute fungizide Eigenschaften besitzen.

Überraschenderweise ist die fungizide Wirkung der erfindungsgemäßen Wirkstoff kombinationen wesentlich höher als die Summe der Wirkungen der einzelnen Wirkstoffe. Es liegt also ein nicht vorhersehbarer, echter synergistischer Effekt vor und nicht nur eine Wirkungsergänzung.

Aus der Strukturformel für den Wirkstoff der Formel (I) ist ersichtlich, dass die Verbindung als E- oder Z-Isomer vorliegen kann. Das Produkt kann daher als Gemisch von verschiedenen Isomeren oder auch in Form eines einzigen Isomeren vorliegen. Bevorzugt sind Verbindungen der Formel (I), in denen die Verbindungen der Formel (I) als E-Isomer vorliegen.

Bevorzugt sind Verbindungen der Formel (I), in denen $R^1$ für unsubstituiertes oder durch Fluor, Chlor, Brom, Methyl oder Ethyl substituiertes Phenyl, 2-Naphthyl, 1,2,3,4-Tetrahydronaphthyl, Indanyl, 2-Thienyl oder 2-Furanyl

steht.

Besonders bevorzugt sind Verbindungen der Formel (I), in denen $R^1$ für unsubstituiertes oder durch Fluor, Chlor, Brom, Methyl oder Ethyl substituiertes Phenyl, 2-Naphthyl, 1,2,3,4-Tetrahydronaphthyl oder Indanyl steht.

Insbesondere seien die Verbindungen der Formel (Ia),

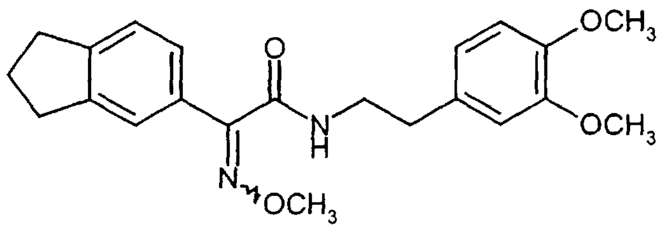

(Ia)

der Formel (Ib)

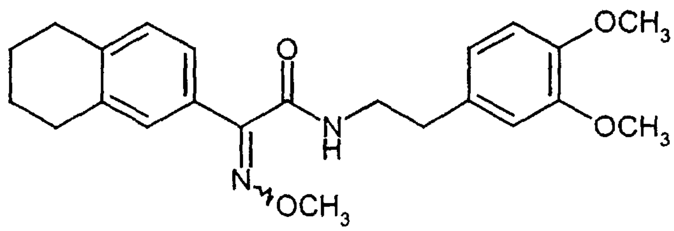

(Ib)

der Formel (Ic),

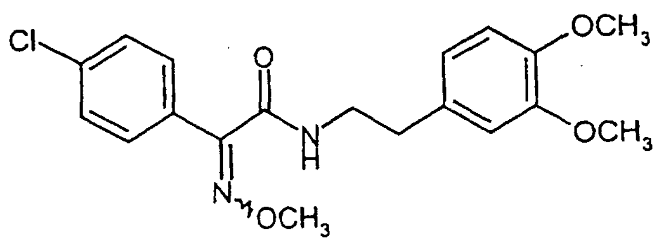

(Ic)

der Formel (Id),

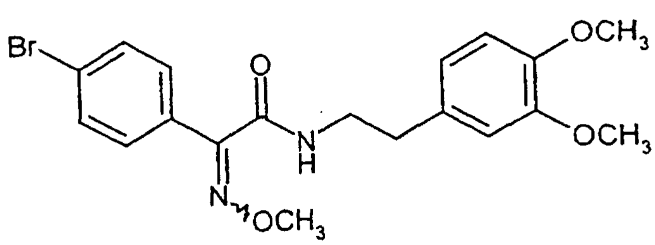

(Id)

der Formel (Ie),

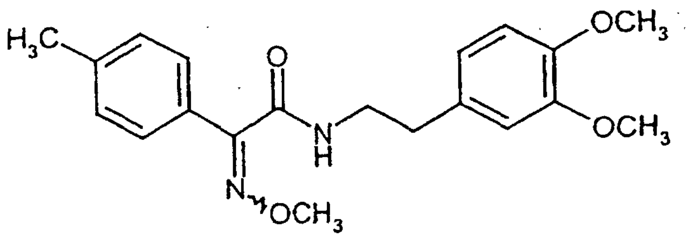

(Ie)

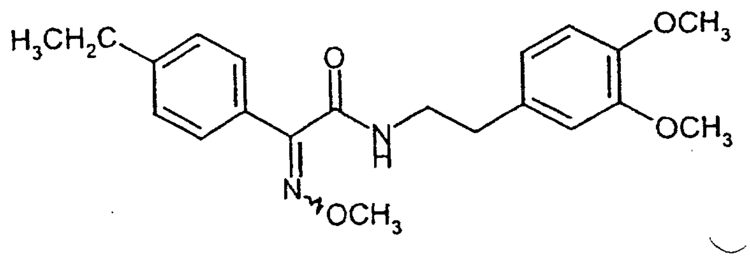

(If)

und deren Isomere wie oben beschrieben, einzeln genannt.

Die in den erfindungsgemäßen Wirkstoffkombinationen vorhandenen Komponenten sind ebenfalls bekannt. Im einzelnen werden die Wirkstoffe in den folgenden Publikationen beschrieben:

(45) Verbindungen der Formeln (XXXXVIa) und (XXXXVIb) bekannt und käuflich erwerbbar

Die erfindungsgemäßen Wirkstoffkombinationen enthalten neben einem Wirkstoff der Formel (I) mindestens einen Wirkstoff von den Verbindungen der Gruppe 45 Sie können darüberhinaus auch weitere fungizid wirksame Zumischkomponenten enthalten.

Wenn die Wirkstoffe in den erfindungsgemäßen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen in einem relativ großen Bereich variiert werden. Im allgemeinen entfallen auf 1 Gewichtsteil an Wirkstoff der Formel (I)

0,1 bis 150 Gewichtsteile, vorzugsweise 1 bis 100 Gewichtsteile an Wirkstoff aus der Gruppe (45).

Die erfindungsgemäßen Wirkstoffkombinationen besitzen sehr gute fungizide Eigenschaften und lassen sich zur Bekämpfung von phytopathogenen Pilzen, wie Plasmodiophoromycetes, Oomycetes, Chytridiomycetes, Zygomycetes, Ascomycetes, Basidiomycetes, Deuteromycetes usw. einsetzen.

Die erfindungsgemäßen Wirkstoffkombinationen eignen sich besonders gut zur Bekämpfung Phytophthora infestans und Plasmopara viticola.

Die gute Pflanzenverträglichkeit der Wirkstoffkombinationen in den zur Bekämpfung von Pflanzenkrankheiten notwendigen Konzentrationen erlaubt eine Behandlung von oberirdischen Pflanzenteilen, von Pflanz- und Saatgut, und des Bodens. Die erfindungsgemäßen Wirkstoffkombinationen können zur Blattapplikation oder auch als Beizmittel eingesetzt werden.

Die erfindungsgemäßen Wirkstoffkombinationen eignen sich auch zur Steigerung des Ernteertrages. Sie sind außerdem mindertoxisch und weisen eine gute Pflanzenverträglichkeit auf.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stengel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Wie bereits oben erwähnt, können erfindungsgemäß alle Pflanzen und deren Teile behandelt werden. In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer

weiteren bevorzugten Ausführungsform werden transgene Pflanzen und Pflanzensorten, die durch gentechnologische Methoden gegebenenfalls in Kombination mit konventionellen Methoden erhalten wurden (Genetic Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit bestimmten Eigenschaften ("Traits"), die sowohl durch konventionelle Züchtung, durch Mutagenese oder durch rekombinante DNA-Techniken erhalten worden sind. Dies können Sorten, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trokkenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Emteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle, Raps sowie Obstpflanzen (mit den Früchten Äpfel, Birnen, Zitrusfrüchten und Weintrauben) erwähnt, wobei Mais, Soja, Kartoffel, Baumwolle und Raps besonders hervorgehoben werden. Als Eigenschaften ("Traits") werden besonders hervorgehoben die erhöhte Abwehr der Pflanzen gegen Insekten durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, beispielsweise Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucotn® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit den Verbindungen der allgemeinen Formel I bzw. den erfindungsgemäßen Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Verbindungen bzw. Mischungen.

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z. B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

Die erfindungsgemäßen Wirkstoffkombinationen können in die üblichen Formulierungen überführt werden,

wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Formulierungen.

Diese Formulierungen werden in bekannter Weise hergestellt, z.B. durch Vermischen der Wirkstoffe bzw. der Wirkstoffkombinationen mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Butan, Propan, Stickstoff und Kohlendioxid. Als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel. Als Emulgier- und/oder schaumerzeugende Mittel kommen in Frage: z.B. nichtionogene und anionische Emulgatoren, wie Polyoxyethylen-Fettsäureester, Polyoxyethylen-Fettalkoholether, z.B. Alkylarylpolyglycol-ether, Alkylsulfonate, Alkylsulfate, Arylsulfonate sowie Eiweißhydrolysate. Als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gew.-% Wirkstoffe, vorzugsweise zwischen 0,5 und 90 %.

Die erfindungsgemäßen Wirkstoffkombinationen können als solche oder in ihren Formulierungen auch in Mischung mit bekannten Fungiziden, Bakteriziden, Akariziden, Nematiziden oder Insektiziden verwendet werden, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

Auch eine Mischung mit anderen bekannten Wirkstoffen, wie Herbiziden oder mit Düngemitteln und Wachstumsregulatoren ist möglich.

Die Wirkstoffkombinationen können als solche, in Form ihrer Formulierungen oder den daraus bereiteten Anwendungsformen, wie gebrauchsfertige Lösungen, emulgierbare Konzentrate, Emulsionen, Suspensionen, Spritzpulver, lösliche Pulver und Granulate, angewendet werden. Die Anwendung geschieht in üblicher Weise, z.B. durch Gießen, Verspritzen, Versprühen, Verstreuen, Verstreichen, Trockenbeizen, Feuchtbeizen, Nassbeizen, Schlämmbeizen oder Inkrustieren.

Beim Einsatz der erfindungsgemäßen Wirkstoffkombinationen können die Aufwandmengen je nach Applikationsart innerhalb eines größeren Bereichs variiert werden. Bei der Behandlung von Pflanzenteilen liegen die Aufwandmengen an Wirkstoffkombination im allgemeinen zwischen 0,1 und 10 000 g/ha, vorzugsweise zwischen 10 und 1 000 g/ha. Bei der Saatgutbehandlung liegen die Aufwandmengen an Wirkstoffkombination im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoffkombination im allgemeinen zwischen 0,1 und 10 000 g/ha, vorzugsweise zwischen 1 und 5 000 g/ha.

Die gute fungizide Wirkung der erfindungsgemäßen Wirkstoffkombinationen geht aus den nachfolgenden Beispielen hervor. Während die einzelnen Wirkstoffe in der fungiziden Wirkung Schwächen aufweisen, zeigen die Kombinationen eine Wirkung, die über eine einfache Wirkungssummierung hinausgeht.

Ein synergistischer Effekt liegt bei Fungiziden immer dann vor, wenn die fungizide Wirkung der Wirkstoffkombinationen größer ist als die Summe der Wirkungen der einzeln applizierten Wirkstoffe.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:

Wenn

X den Wirkungsgrad beim Einsatz des Wirkstoffes A in einer Aufwandmenge von m g/ha bedeutet,
Y den Wirkungsgrad beim Einsatz des Wirkstoffes B in einer Aufwandmenge von n g/ha bedeutet und
E den Wirkungsgrad beim Einsatz der Wirkstoffe A und B in Aufwandmengen von m und n g/ha bedeutet,
dann ist

$$E = X + Y - \frac{X \cdot Y}{100}$$

Dabei wird der Wirkungsgrad in % ermittelt. Es bedeutet 0 % ein Wirkungsgrad, der demjenigen der Kontrolle entspricht, während ein Wirkungsgrad von 100 % bedeutet, dass kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muss der tatsächlich beobachtete Wirkungsgrad größer sein als der aus der oben angeführten Formel errechnete Wert für den erwarteten Wirkungsgrad (E).

Das nachfolgende Beispiel dient zur Erläuterung der Erfindung. Die Erfindung ist jedoch nicht auf das Beispiel limitiert.

**Beispiel**

**Plasmopara-Test (Rebe) / protektiv**

Lösungsmittel : 49 Gewichtsteile Aceton
Emulgator : 1 Gewichtsteile Alkyl-Aryl-Polyglykolether

Zur Herstellung einer zweckmäßigen Wirkstoffzubereitung vermischt man 1 Gewichtsteil Wirkstoff oder Wirkstoffkombination mit den angegebenen Mengen Lösungsmittel und Emulgator und verdünnt das Konzentrat mit Wasser auf die gewünschte Konzentration oder man verdünnt eine handelsübliche Formulierung von Wirkstoff oder Wirkstoffkombination mit Wasser auf die gewünschte Konzentration.

Zur Prüfung auf protektive Wirksamkeit werden junge Pflanzen mit der Wirkstoffzubereitung in der angegebenen Aufwandmenge besprüht. Nach Antrocknen des Spritzbelages werden die Pflanzen mit einer wäßrigen Sporensuspension von ***Plasmopara viticola*** inokuliert und verbleiben dann 1 Tag in einer Inkubationskabine bei ca. 20°C und 100% relativer Luftfeuchtigkeit. Anschließend werden die Pflanzen 4 Tage im Gewächshaus bei ca. 21°C und ca. 90% Luftfeuchtigkeit aufgestellt. Die Pflanzen werden dann angefeuchtet und 1 Tag in eine Inkubationskabine gestellt.

6 Tage nach der Inokulation erfolgt die Auswertung. Dabei bedeutet 0% ein Wirkungsgrad, der demjenigen der Kontrolle entspricht, während ein Wirkungsgrad von 100% bedeutet, daß kein Befall beobachtet wird.

Die zu erwartende Wirkung für eine gegebene Kombination zweier Wirkstoffe kann nach S.R. Colby ("Calculating Synergistic and Antagonistic Responses of Herbicide Combinations", Weeds 15 (1967), 20-22) wie folgt berechnet werden:

Wenn

X den Wirkungsgrad beim Einsatz des Wirkstoffes A in einer Aufwandmenge von m g/ha bedeutet,
Y den Wirkungsgrad beim Einsatz des Wirkstoffes B in einer Aufwandmenge von n g/ha bedeutet und
E den Wirkungsgrad beim Einsatz der Wirkstoffe A und B in Aufwandmengen von m und n g/ha bedeutet,

$$\text{dann ist } E = X + Y - \frac{X \times Y}{100}$$

Dabei wird der Wirkungsgrad in % ermittelt. Es bedeutet 0% ein Wirkungsgrad, der demjenigen der Kontrolle entspricht, während ein Wirkungsgrad von 100% bedeutet, daß kein Befall beobachtet wird.

Ist die tatsächliche fungizide Wirkung größer als berechnet, so ist die Kombination in ihrer Wirkung überadditiv, d.h. es liegt ein synergistischer Effekt vor. In diesem Fall muß der tatsächlich beobachtete Wirkungsgrad größer sein als der aus der oben angeführten Formel errechnete Wert für den erwarteten Wirkungsgrad (E).

Aus der nachfolgenden Tabelle geht eindeutig hervor, daß die gefundene Wirkung der erfindungsgemäßen Wirkstoffkombination größer ist als die berechnete, d.h., daß ein synergistischer Effekt vorliegt.

## TABELLE

### Plasmopara-Test (Rebe) / protektiv

| Wirkstoff<br><br>Bekannt: | Aufwandmenge an Wirkstoff in g/ha | % Wirkungsgrad |
|---|---|---|
| Ib 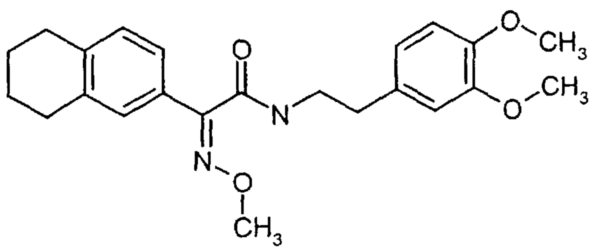 | 10 | 66 |
| Kupferoxychlorid (XXXXVIa) | 100 | 26 |

Erfindungsgemäße Mischung:

| | Mischungsverhältnis | Aufwandmenge an Wirkstoff in g/ha | tatsächlicher Wirkungsgrad | Erwartungswert, berechnet mit Colby-Formel |
|---|---|---|---|---|
| (Ib) + Kupferoxychlorid (XXXXVIa) | **1:10** | 10 + 100 | **89** | **75** |

**Patentansprüche**

**1.** Wirkstoffkombinationen, enthaltend mindestens eine Verbindung der allgemeinen Formel (I),

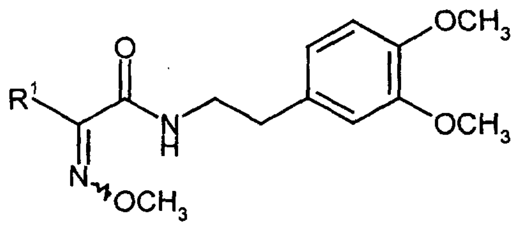

(I)

in welcher

$R^1$ für unsubstituiertes oder durch Fluor, Chlor, Brom, Methyl, Ethyl, n- oder i-Propyl, n-, i- oder t-Butyl, Methoxy, Ethoxy oder Phenoxy substituiertes Phenyl, 2-Naphthyl, 1,2,3,4-Tetrahydronaphthyl, Indanyl, 2-Benzofuranyl, 2-Benzothienyl, 2-Thienyl oder 2-Furanyl steht,

und

(45)

a) Kupferoxychlorid (XXXXVIa) und/oder
b) Kupferhydroxid (XXXXVb).

**2.** Fungizide Mischungen gemäß Anspruch 1, enthaltend Verbindungen der Formel (I), in denen $R^1$ für unsubstituiertes oder durch Fluor, Chlor, Brom, Methyl oder Ethyl substituiertes Phenyl, 2-Naphthyl, 1,2,3,4-Tetrahydronaphthyl oder Indanyl steht.

**3.** Fungizide Mischungen gemäß Anspuch 1, enthaltend als Verbindungen der Formel (I) Verbindungen der Formel (Ia)

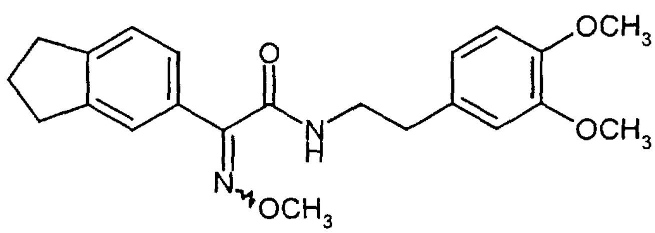

(Ia)

.

**4.** Fungizide Mischungen gemäß Anspuch 1, enthaltend als Verbindungen der Formel (I) Verbindungen der Formel (Ib)

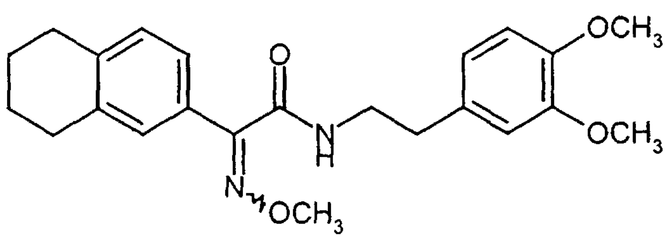

(Ib)

**5.** Fungizide Mischungen gemäß Anspuch 1, enthaltend als Verbindungen der Formel (I) Verbindungen der Formel (Ic)

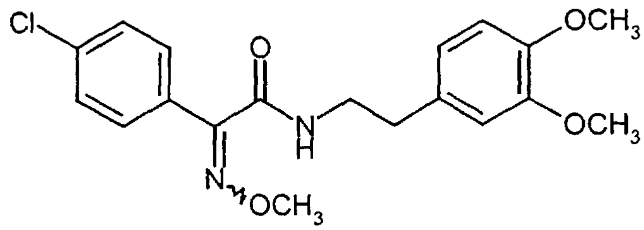

(Ic)

.

6. Fungizide Mischungen gemäß Anspuch 1, enthaltend als Verbindungen der Formel (I) Verbindungen der Formel (Id)

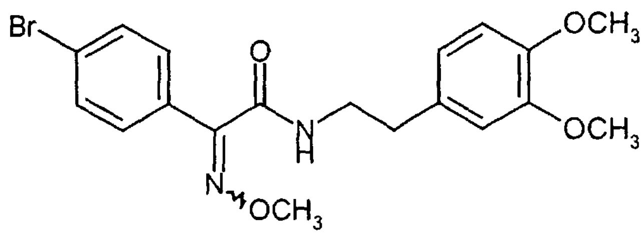

(Id)

.

7. Fungizide Mischungen gemäß Anspuch 1, enthaltend als Verbindungen der Formel (I) Verbindungen der Formel (Ie)

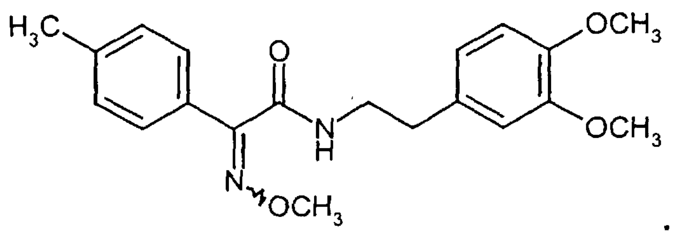

(Ie)

.

8. Fungizide Mischungen gemäß Anspuch 1, enthaltend als Verbindungen der Formel (I) Verbindungen der Formel (If)

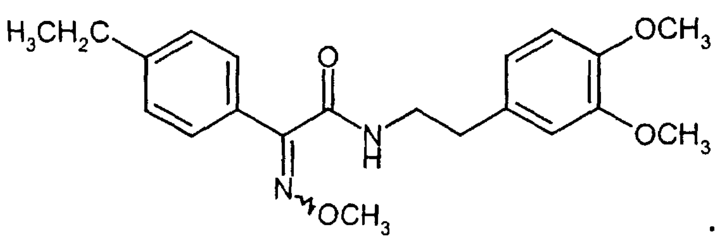

(If)

.

9. Mittel gemäß mindestens einem der Ansprüche 1 bis 8, **dadurch gekennzeichnet, dass** in den Wirkstoffkombinationen das Gewichtsverhältnis von Wirkstoff der Formel (I) zu Wirkstoff der Gruppe (45) zwischen 1:0,1 und 1: 150 liegt.

10. Verfahren zur Bekämpfung von Pilzen, **dadurch gekennzeichnet, daß** man Wirkstoffkombinationen gemäß mindestens einem der Ansprüche 1 bis 9 auf die Pilze und/oder deren Lebensraum ausbringt.

**11.** Verwendung von Wirkstoffkombinationen gemäß mindestens einem der Ansprüche 1 bis 9 zur Bekämpfung von Pilzen.

**12.** Verfahren zur Herstellung von fungiziden Mitteln, **dadurch gekennzeichnet, daß** man Wirkstoffkombinationen gemäß mindestens einem der Ansprüche 1 bis 9 mit Streckmitteln und/oder oberflächenaktiven Stoffen vermischt.

## Claims

**1.** Active compound combinations, comprising at least one compound of the general formula (I),

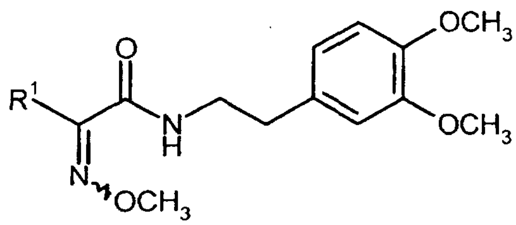

(I)

in which

$R^1$ represents unsubstituted or fluorine-, chlorine-, bromine-, methyl-, ethyl-, n- or i-propyl-, n-, i- or t-butyl-, methoxy-, ethoxy- or phenoxy-substituted phenyl, 2-naphthyl, 1,2,3,4-tetrahydronaphthyl, indanyl, 2-benzofuranyl, 2-benzothienyl, 2-thienyl or 2-furanyl,

and

(45) (XXXXVIa) and/or

a) copper oxychloride
b) copper hydroxide (XXXXVIb).

**2.** Fungicidal mixtures according to Claim 1, comprising compounds of the formula (I) in which $R^1$ represents unsubstituted or fluorine-, chlorine-, bromine-, methyl- or ethyl-substituted phenyl, 2-naphthyl, 1,2,3,4-tetrahydronaphthyl or indanyl.

**3.** Fungicidal mixtures according to Claim 1, comprising as compounds of the formula (I) compounds of the formula (Ia)

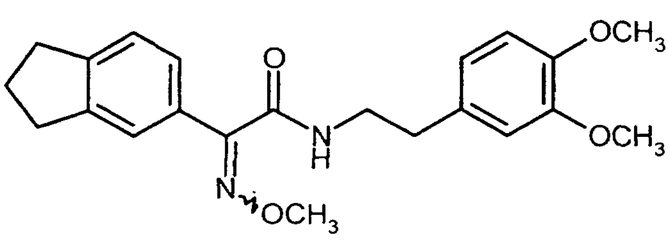

(Ia)

**4.** Fungicidal mixtures according to Claim 1, comprising as compounds of the formula (I) compounds of the formula (Ib)

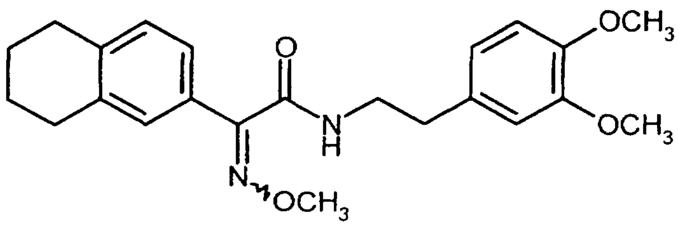

(Ib)

5. Fungicidal mixtures according to Claim 1, comprising as compounds of the formula (I) compounds of the formula (Ic)

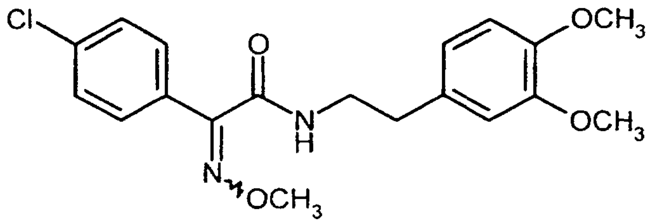

(Ic)

6. Fungicidal mixtures according to Claim 1, comprising as compounds of the formula (I) compounds of the formula (Id)

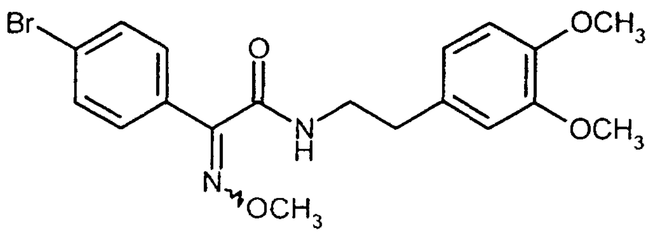

(Id)

7. Fungicidal mixtures according to Claim 1, comprising as compounds of the formula (I) compounds of the formula (Ie)

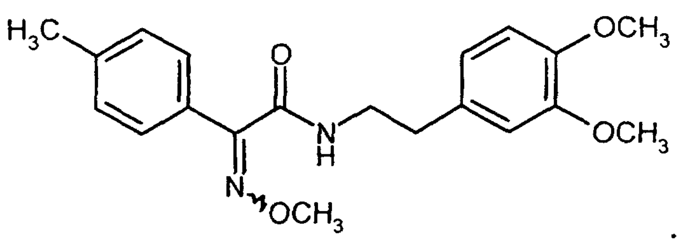

(Ie)

8. Fungicidal mixtures according to Claim 1, comprising as compounds of the formula (I) compounds of the formula (If)

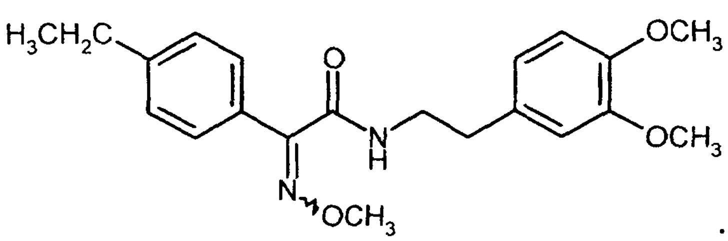

(If)

9. Composition according to at least one of Claims 1 to 8, **characterized in that** in the active compound combinations the weight ratio of active compound of active compound of the formula (I) to active compound of group (45) is from 1:0.1 to 1:150.

**10.** Method for controlling fungi, **characterized in that** the active compound combinations according to at least one of Claims 1 to 9 are applied to the fungi and/or their habitat.

**11.** Use of active compound combinations according to at least one of Claims 1 to 9 for controlling fungi.

**12.** Process for preparing fungicidal compositions, **characterized in that** active compound combinations according to at least one of Claims 1 to 9 are mixed with extenders and/or surfactants.

## Revendications

**1.** Combinaisons de substances actives, contenant au moins un composé de formule (I),

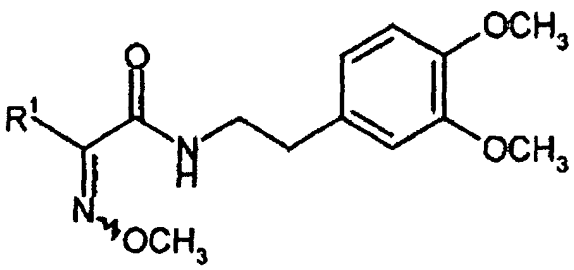

(I)

dans laquelle

$R^1$ est un reste phényle non substitué ou portant un substituant fluoro, chloro, bromo, méthyle, éthyle, n-propyle, isopropyle, n-butyle, isobutyle, tertiobutyle, méthoxy, éthoxy ou phénoxy, un reste 2-naphtyle, 1,2,3,4-tétrahydronaphtyle, indanyle, 2-benzofurannyle, 2-benzothiényle, 2-thiényle ou 2-furannyle,

et

(45)

a) de l'oxychlorure de cuivre (XXXXVIa) et/ou
b) de l'hydroxyde de cuivre (XXXXVb).

**2.** Mélanges fongicides suivant la revendication 1, contenant des composés de formule (I) dans lesquels $R^1$ est un reste phényle non substitué ou substitué par un radical fluoro, chloro, bromo, méthyle ou éthyle, un reste 2-naphtyle, 1,2,3,4-tétrahydronaphtyle ou indanyle.

**3.** Mélanges fongicides suivant la revendication 1, contenant comme composés de formule (I) des composés de formule (Ia)

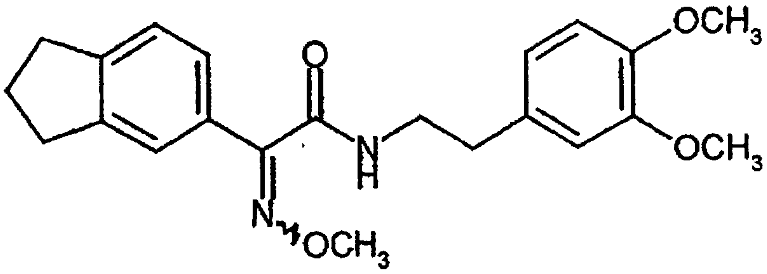

(Ia)

.

**4.** Mélanges fongicides suivant la revendication 1, contenant comme composés de formule (I) des composés de formule (Ib)

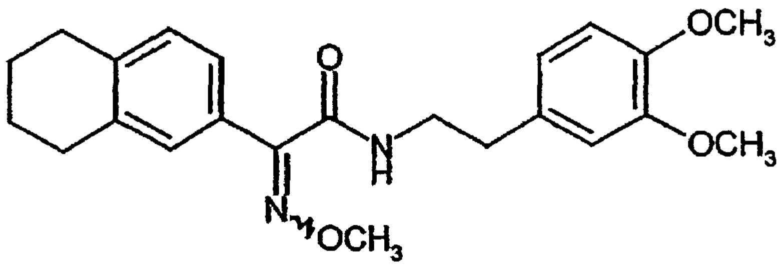

(Ib)

5. Mélanges fongicides suivant la revendication 1, contenant comme composés de formule (I) des composés de formule (Ic)

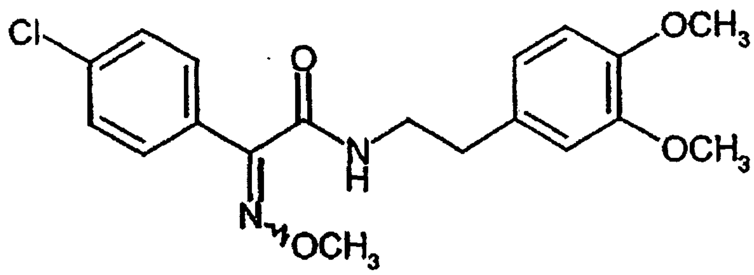

(Ic)

6. Mélanges fongicides suivant la revendication 1, contenant comme composés de formule (I) des composés de formule (Id)

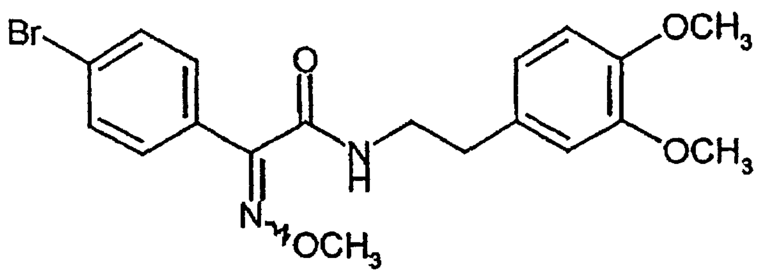

(Id)

7. Mélanges fongicides suivant la revendication 1, contenant comme composés de formule (I) des composés de formule (Ie)

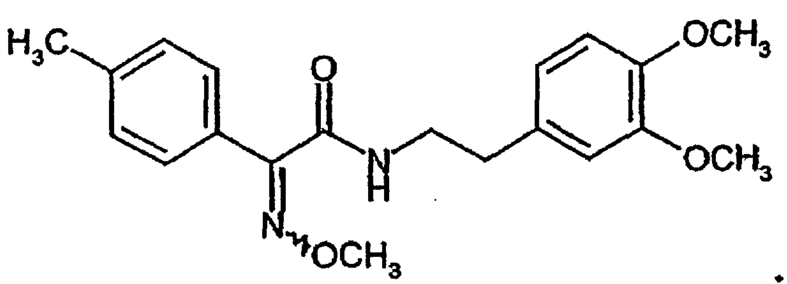

(Ie)

8. Mélanges fongicides suivant la revendication 1, contenant comme composés de formule (I) des composés de formule (If)

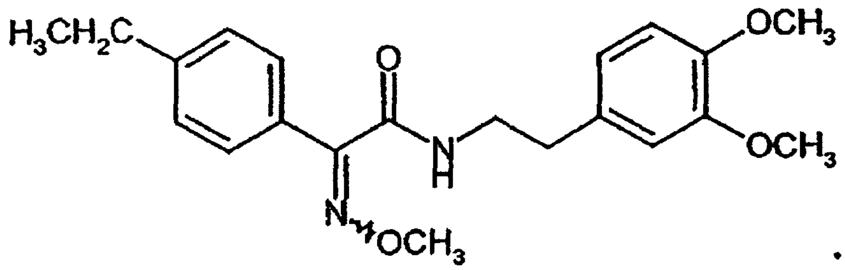 (If)

**9.** Compositions suivant au moins l'une des revendications 1 à 8, **caractérisées en ce que** dans les combinaisons de substances actives, le rapport en poids de la substance active de formule (I) à la substance active du groupe (45) se situe entre 1:0,1 et 1:150.

**10.** Procédé pour combattre des champignons, **caractérisé en ce qu'**on épand des combinaisons de substance active suivant au moins l'une des revendications 1 à 9 sur les champignons et/ou sur leur milieu.

**11.** Utilisation de combinaisons de substances actives suivant au moins l'une des revendications 1 à 9, pour combattre des champignons.

**12.** Procédé de préparation de compositions fongicides, **caractérisé en ce qu'**on mélange des combinaisons de substances actives suivant au moins l'une des revendications 1 à 9, avec des diluants et/ou des agents tensioactifs.